(19) Europäisches Patentamt

European Patent Office

Office européen des brevets

(11) **EP 1 643 790 A2**

(12) **EUROPEAN PATENT APPLICATION**

(43) Date of publication:
05.04.2006 Bulletin 2006/14

(51) Int Cl.:
*H04Q 7/38* (2006.01)

(21) Application number: 05251055.9

(22) Date of filing: 23.02.2005

(84) Designated Contracting States:
AT BE BG CH CY CZ DE DK EE ES FI FR GB GR
HU IE IS IT LI LT LU MC NL PL PT RO SE SI SK TR
Designated Extension States:
AL BA HR LV MK YU

(30) Priority: 30.09.2004 JP 2004286301

(71) Applicant: FUJITSU LIMITED
Kawasaki-shi,
Kanagawa 211-8588 (JP)

(72) Inventors:
• Sawamoto, Toshiro,
c/o Fujitsu Limited
Kawasaki-shi,
Kanagawa 211-8588 (JP)
• Minowa, Morihiko,
Fujitsu Limited
Kawasaki-shi,
Kanagawa 211-8588 (JP)

(74) Representative: Hitching, Peter Matthew et al
Haseltine Lake,
Imperial House,
15-19 Kingsway
London WC2B 6UD (GB)

(54) **Wireless base station device and path search method**

(57) In a wireless base station device (11) that communicates with a mobile device (71) via an advance base station (51), the reception timing determination portion (12) determines the reception timing of data that is transmitted by a mobile device that exists in a cell of the advance base station on the basis of the distance between the wireless base station device (11) and the advance base station (51) and the cell radius of the advance base station. The data reception portion (13) receives data from the mobile device (71) by performing a reception operation at the reception timing, the delay profile creation portion (14) creates delay profiles on the basis of the received data, and the path detection portion (15) detects paths from the mobile device on the basis of the delay profiles.

*FIG. 1*

EP 1 643 790 A2

**Description**

BACKGROUND OF THE INVENTION

The present invention relates to a wireless base station device and path search method and, more particularly, to a wireless base station device that communicates with a mobile device via an advance base station, detects multipath from the mobile device to the advance base station, and synthesizes and processes signals received from each of these paths, and to a path search method of the wireless base station device.

In mobile communications, random amplitudes and phase variations and fading with a maximum frequency that is determined according to the frequency of the carrier wave and the speed of the moving body arise and, as a result, stable reception is extremely difficult in comparison with fixed wireless communications. The spectrum spreading communication method is effective in alleviating degradation caused by the effects of such frequency selective fading. This is because, even when a decrease in the received field strength occurs in a certain specific frequency range because a signal of narrow bandwidth is transmitted after being spread to a high bandwidth, information can be recovered from the other bandwidths with very errors. For this reason, DS-CDMA (Direct Sequence Code Division Multiple Access) technology has been adopted in Third Generation digital cellular wireless communication systems. With DS-CDMA, transmission information of a plurality of channels (users) is multiplexed by means of spread code and then transmitted via a transmission path such as a wireless line.

Furthermore, in mobile communications, when the same fading as that above is produced as a result of the peripheral environment of the receiver due to a delayed wave from a high-rise building or mountain, or the like, a multi-fading environment then exists. In the case of DS, because the delayed wave constitutes interference with respect to the spread code, degradation of the reception characteristic is induced. As one method that is actively used to improve the characteristic of the delayed wave, the RAKA reception method (Rake reception method) is known. This is a method that performs de-spreading for each of the delay waves arriving via each path of the multipath and synthesizes the delay waves by arranging the respective delay times.

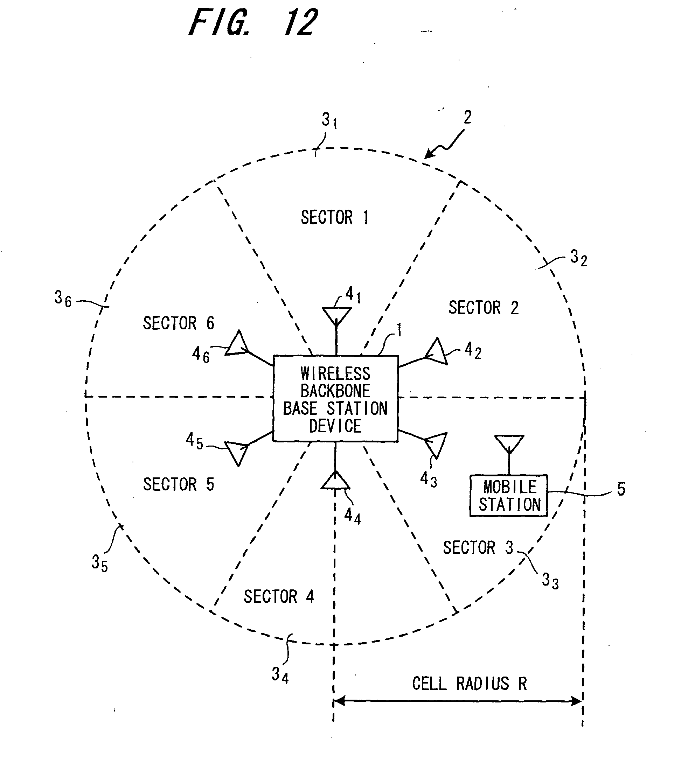

Fig. 12 illustrates the constitution of a cell of a DS-CDMA wireless backbone base station device 1. A cell 2 at the center of which lies the base station device 1 is divided up into a plurality (six, for example) of cells $3_1$ to $3_6$, in each of which directional antennas $4_1$ to $4_6$ are provided. Further, although a single antenna is shown in each cell, a configuration comprising two diversity antennas is typical.

The backbone base station device 1 sends and receives a wireless signal to and from each mobile station within the cell via each antenna. For example, the backbone base station device 1 is able to communicate by receiving a signal from mobile station 5 by means of antenna $4_3$, computing the correlation between the received signal and the desired signal, creating a delay profile corresponding with the cell radius R, detecting multipath from the mobile station 5 to the backbone base station device 1 on the basis of the peak of the delay profile, and receiving radio waves from all the mobile devices in the arriving signals via each path.

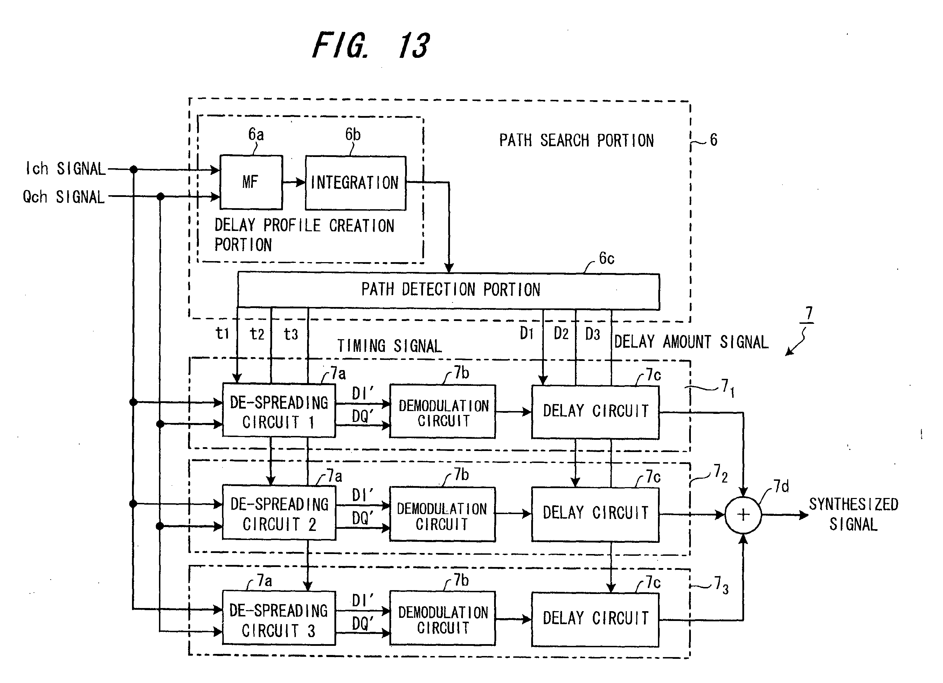

Fig. 13 is a block diagram of a path search portion 6 and a Rake synthesis/demodulation portion 7 that constitute the base station device 1. The Rake synthesis/demodulation portion 7 comprises fingers $7_1$, $7_2$, $7_3$ that are provided in accordance with each path of the multipath and a Rake synthesis portion 7d that synthesizes the outputs of each finger. The path search portion 6 comprises a matched filter (MF) 6a, an integration circuit 6b, and a path detection portion 6c and detects multipath, identifies the arrival times of the signals arriving via each path or delay times from a reference time and inputs timing data $t_1$ to $t_3$ and delay time adjustment data $D_1$ to $D_3$ for the start of de-spreading to the fingers corresponding with each path. The matched filter 6a and integration circuit 6b constitute a delay profile creation portion.

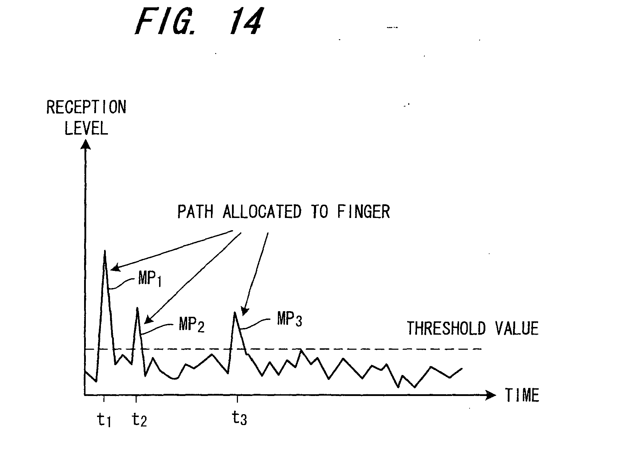

When a direct spreading signal that is affected by multipath is inputted to the matched filter 6a, same performs a self-correlation calculation for the desired signal contained in the received signal and a delay profile (Fig. 14) corresponding with the cell radius is outputted by the integration circuit 6b. The path detection portion 6c references a delay profile corresponding with the cell radius outputted by the integration circuit 6b, detects multipath on the basis of multipath signals $MP_1$, $MP_2$, $MP_3$ that are larger than a threshold value, detects the respective paths constituting the multipath and the delay times $t_1$, $t_2$, $t_3$ and then inputs timing data $t_1$, $t_2$, $t_3$ for the start of de-spreading and delay time adjustment data $D_1$, $D_2$, and $D_3$ to the fingers $7_1$, $7_2$, $7_3$ corresponding with each path.

The fingers $7_1$, $7_2$, $7_3$ corresponding with each path have the same constitution and each comprise a de-spreading circuit 7a, a demodulation circuit 7b, and a delay circuit 7c. Each de-spreading circuit 7a performs de-spreading processing on the received Ich signal and Qch signal by using the de-spread code of its own channel at the timings ($t_1$ to $t_3$) indicated by the path search portion 6. The demodulation circuits 7b demodulate the original data by using I symbol data $D_I'$ and Q symbol data $D_Q'$ that are obtained by means of the de-spreading and the delay circuits 7c apply delays corresponding to the periods ($D_1$ to $D_3$) indicated by the path search portion 6 and output the delayed signals. As a result, each finger performs de-spreading at the same times as for the mobile device spread code, adjusts the delay time in accordance with the path, inputs the signal to the Rake synthesis portion 7d with the phase in step, whereupon the Rake synthesis portion 7d synthesizes and outputs the input signals.

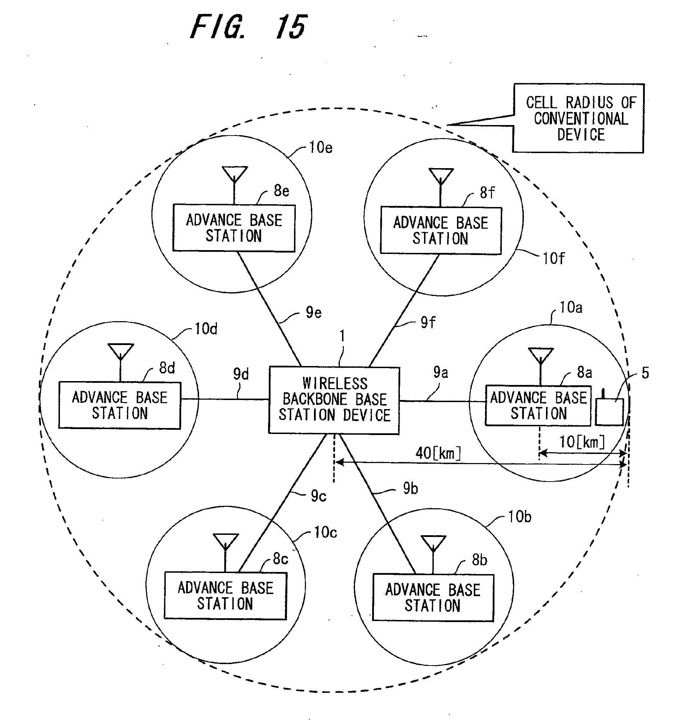

The cell constitution of Fig. 12 is suitable in areas in which a multiplicity of mobile devices exists over a wide range such as in the city or country. However, such a cell constitution is unsuitable in regions with disperse locations where mobile devices exist as in the case of a mountain region or in a long, narrow region such as a tunnel. As a result, a cell constitution that comprises advance base stations shown in Fig. 15 has also been proposed. In this cell constitution, a plurality of advance base stations 8a to 8f is connected to the wireless backbone base station device 1 by means of fiber-optic cables 9a to 9f respectively and the wireless backbone base station device 1 performs communications with mobile devices that exist in each of respective cells (also called cells) 10a to 10f via the advance base stations 8a to 8f respectively. The advance base stations 8a to 8f only relay data communications between the wireless backbone base station device 1 and the mobile devices in the cells 10a to 10f and, although not illustrated, the advance base stations 8a to 8f have a simple constitution comprising an antenna, a wireless transceiver portion, an AD conversion/DA conversion portion, and an OE/EO conversion portion, and so forth.

In the case of the cell constitution in Fig. 15, which employs advance base stations, the cells 10a to 10f are small cell units that have the advance base stations 8a to 8f at the center thereof. The cell radii need not necessarily be the same. Further, the distances between the wireless backbone base station device 1 and each of the advance base stations 8a to 8f (advance distances) vary according to the position of the cells and are not the same. Hence, the wireless backbone base station device 1 must suitably change the timings for generating the delay profile data and the data lengths thereof in accordance with the advance distances and cell radii, and so forth.

However, in conventional product groups, delay profile generation processing that takes the advance distance and cell radius, and so forth into account is not performed and, with the cell constitution in Fig. 15, the creation of a delay profile and execution of a path search with a time interval that is equivalent to 40 (km) irrespective of the advance base station position are required and involve a large path detection processing burden. That is, when the advance distance is long, a delay time that is equivalent to the period in which the signal returns from the advance base station to the wireless backbone base station device 1 is produced. Conventionally, the signal reception operation has had to continue even in periods between delay times when signals do not return, which has involved a large path-detection processing burden. As a result, this has brought about an increase in the circuit scale and a decrease in the number of accommodated channels, and so forth. The advance distance has also placed restrictions on the cell radius of the advance base stations.

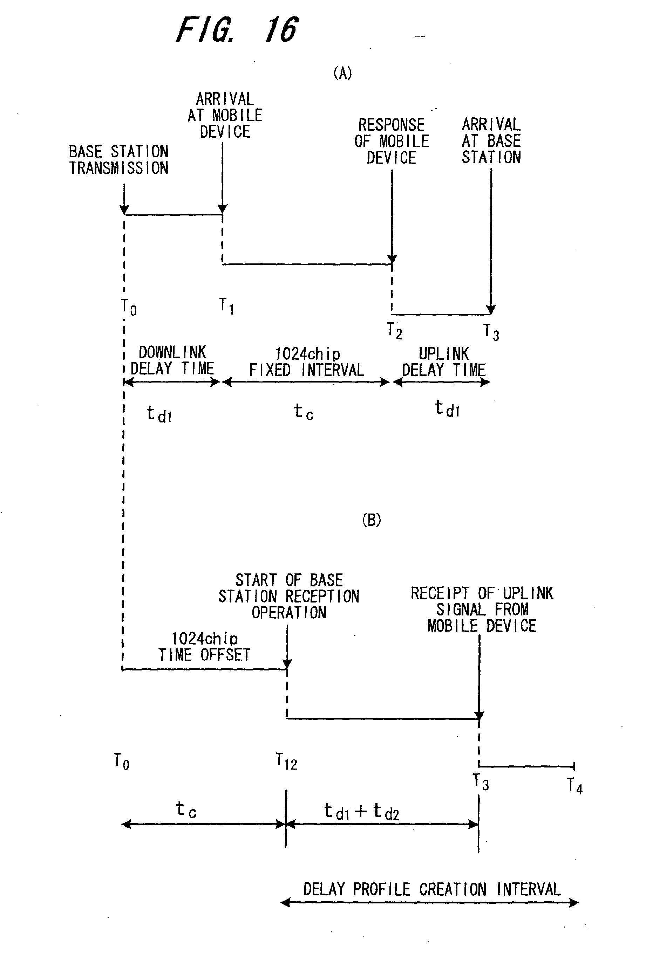

For example, a send/receive sequence between the base station device 1 and a mobile device 5 in cell 10a according to the W-CDMA method is shown in Fig. 16. That is, as shown in (A), at time $T_0$, a signal transmitted by the base station device 1 arrives at the mobile device 5 at time $T_1$ after the downlink delay time $t_{d1}$ corresponding with the advance distance and cell radius has elapsed. The mobile device 5 waits until a fixed timing offset period (a period equivalent to 1024 chips) $t_c$ has elapsed after receiving the downlink signal and transmits an uplink signal at time $T_2$ after this period has elapsed. The uplink signal arrives at the base station device 1 at time $T_3$ after the uplink delay time $t_{d2}$ corresponding with the advance distance and cell radius has elapsed.

After sending the downlink signal, the base station device 1 starts the reception operation starting from time $T_{12}$ at which the fixed timing offset period $t_c$ has elapsed as shown in Fig. 16B, receives the uplink signal equivalent to a time corresponding with the cell radius after receiving the uplink signal at time $T_3$, accordingly creates a delay profile for the time interval $T_{12}$ to $T_4$, and detects multipath on the basis of this delay profile. As detailed earlier, conventionally, the base station device 1 does not consider advance distance and the delay time $(t_{d1}+t_{d2})$ corresponding with the cell radius. As a result, there has been the problem that a path search is performed after creating delay profile data over a long time that contains the delay time, meaning that worthless data is acquired and processed. The effect is large particularly because transmission/reception control is performed for each channel (user), which places a great burden on the path detection processing and causes an increase in the circuit scale and a reduction in the number of accommodated channels, and so forth.

The prior art includes a spectrum spreading communication system (see claims 1 and 13 of JP2000-50338A, for example) that makes it possible to perform rapid signal demodulation in a mobile device or handover destination base station instead of performing a wide-range path search.

According to the prior art of JP2000-50338A, when a mobile device performs handover, the reception timing difference between the handover-source base station and the handover destination base station is stored and a period of a predetermined time interval is established as the reception timing by considering the stored reception timing difference, whereby the path search range is narrowed and the signal demodulation processing load is lightened. However, the prior art does not prevent an increase in the path search range that arises from the delay time that corresponds with the advance distance and cell radius, and so forth in a cell constitution comprising advance base stations.

SUMMARY OF THE INVENTION

Accordingly, an object of the present invention is to reduce unnecessary data reception, processing, and the like by removing the delay time corresponding with the advance distance, cell radius, and so forth from the data reception timing.

A further object of the present invention is to narrow the time interval of the delay profile, that is, the path search range, by shortening the data reception period and thus lighten the processing load.

Yet another object of the present invention is to reduce unnecessary data reception, processing, and the like by considering the delay time corresponding with the advance distance and cell radius specific to each cell, even during handover.

The present invention achieves the above objects by means of a wireless base station device that communicates with a mobile device via an advance base station, and a path search circuit and path search method of the wireless base station device.

The wireless base station device of the present invention comprises a reception timing determination portion that determines the reception timing of data that is transmitted by a mobile device that exists in a cell of the advance base station on the basis of the distance between the wireless base station device and the advance base station and the cell radius of the advance base station; a data reception portion that receives data from the mobile device by performing a reception operation at the reception timing; a delay profile creation portion that creates a delay profile on the basis of the received data; a path detection portion that detects paths from the mobile device on the basis of the delay profile; and a demodulation portion that demodulates data from signals received via the detected paths. The advance base station also comprises advance base stations that are cascade-connected in sequence to the advance base station.

The wireless base station device further comprises a handover control portion that controls handover in accordance with movement of the mobile device, wherein the reception timing determination portion determines, on the basis of control by the handover control portion, the reception timing of data transmitted by the mobile device via each of the cells associated with the handover; the delay profile creation portion creates delay profiles on the basis of data received from the cells at the respective reception timings; and the path detection portion detects paths of large power from all of the delay profiles thus created.

In this case, the handover control portion references the respective reception timings and calculates the difference between the timing at which the very first delay profile was generated and the timing at which another delay profile was generated and, when the difference is equal to or more than a set value, implements control to shorten the total processing time for delay profile creation and path detection. Further, the handover control portion manages the channels of all the cells of the mobile device undergoing handover and detects the paths from the mobile device for which the delay profiles of all the channels have been gathered.

The path search circuit of the wireless base station device of the present invention comprises a reception timing determination portion that determines the reception timing of data that is transmitted by a mobile device that exists in a cell of the advance base station on the basis of the distance between the wireless base station device and the advance base station and the cell radius of the advance base station; a data reception portion that receives data from the mobile device by performing a reception operation at the reception timing; a delay profile creation portion that creates a delay profile on the basis of the received data; and a path detection portion that detects paths from the mobile device on the basis of the delay profile.

The path search circuit comprises a handover control portion that controls handover in accordance with movement of the mobile device, wherein the reception timing determination portion determines, on the basis of control by the handover control portion, the reception timing of data transmitted by the mobile device via the cells associated with the handover; the delay profile creation portion creates delay profiles on the basis of data received from each cell at the respective reception timings; and the path detection portion detects paths of large power from all of the delay profiles thus created.

In this case, the handover control portion references the respective reception timings and calculates the difference between the timing at which the delay profile was generated first and the timing when another delay profile was generated and, when the difference is equal to or more than a set value, implements control to shorten the total processing time for delay profile creation and path detection. Further, the handover control portion manages the channels of all the cells of the mobile device undergoing handover and detects the paths from the mobile device for which the delay profiles of all the channels have been gathered.

The path search method of the present invention is a path search method of a wireless base station device that communicates with a mobile device via an advance base station, detects paths from the mobile device to the advance base station, and demodulates data from signals received via the paths, comprising the steps of: determining the reception timing of data that is transmitted by a mobile device that exists in a cell of the advance base station on the basis of the distance between the wireless base station device and the advance base station and the cell radius of the advance base station; receiving data from the mobile device by performing a reception operation at the reception timing; creating a delay profile on the basis of the received data; and detecting multipath from the mobile device on the basis of the delay profile.

According to the present invention, unnecessary data reception and processing, and so forth, can be reduced following removal of the delay time corresponding with the advance distance and the cell radius, and so forth, from the data reception timing.

According to the present invention, because the delay period corresponding with the advance distance and cell radius, and so forth, is removed from the data reception timing, the data reception timing can be shortened and the time interval of the delay profile, that is, the path search range, can be narrowed whereby the processing load can be lightened. As a result, the path detection processing can be lightened and an increase in the circuit scale, a reduction in the number of accommodated channels, and so forth, can be prevented.

The present invention is able to reduce unnecessary data reception, processing, and the like, by considering the delay time corresponding with the advance distance and cell radius specific to each cell, even during handover, meaning that the processing load can be lightened and it is possible to prevent an increase in the circuit scale and a reduction in the number of accommodated channels, and so forth.

Other features and advantages of the present invention will be apparent from the following description taken in conjunction with the accompanying drawings.

BRIEF DESCRIPTION OF THE DRAWINGS

Fig. 1 illustrates an embodiment of the present invention;
Fig. 2 shows the constitution of the wireless base station device of the present invention;
Fig. 3 shows the processing flow of data reception;
Fig. 4 shows the processing flow of a path search during handover;
Fig. 5 illustrates path detection processing;
Fig. 6 illustrates a delay profile creation end timing difference $\Delta T$ in a case where the processing time is not shortened during handover and in a case where the processing time is shortened during handover;
Fig. 7 shows the constitution of the delay profile data generation portion of a third embodiment example;
Fig. 8 shows the processing time control flow of the third embodiment;
Fig. 9 shows the constitution of a path search portion that implements a fourth embodiment example;
Fig. 10 is an example of the disposition of the cascade connections of advance base stations according to a fifth embodiment example;
Fig. 11 shows the constitution of cascade-connection advance base stations;
Fig. 12 illustrates the constitution of a first cell of a wireless backbone base station device;
Fig. 13 is a block diagram of the path search portion and Rake synthesis/demodulation portion that constitute the base station device;
Fig. 14 illustrates a delay profile;
Fig. 15 illustrates another cell constitution comprising an advance base stations; and
Fig. 16 is the transmission/reception sequence between a base station device and a mobile device.

DESCRIPTION OF THE PREFERRED EMBODIMENTS

(A) First embodiment

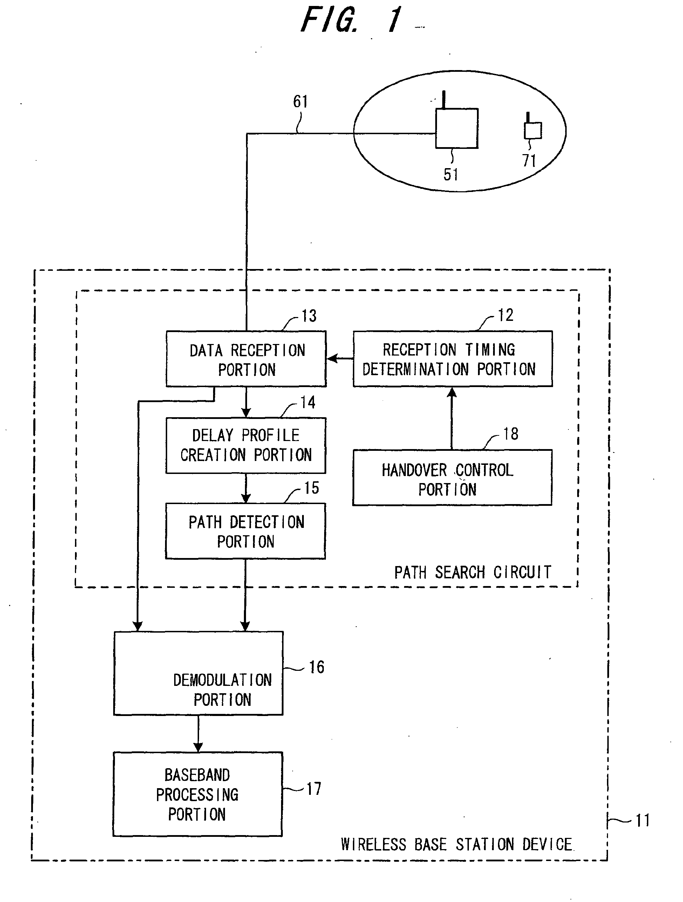

Fig. 1 illustrates an embodiment of the present invention. A fiber-optic cable 61 is connected between a wireless base station device 11 and an advance base station 51 to enable fiber-optic communications. A reception timing determination portion 12 determines the reception timing of data that is transmitted by a mobile device 71 that exists in a cell on the basis of the distance between the wireless base station device 11 and the advance base station 51 and of the cell radius of the advance base station 51. The data reception portion 13 receives data from the mobile device 71 by performing a reception operation at the reception timing and then stores the data. A delay profile creation portion 14 creates a delay profile on the basis of the received data, a path detection portion 15 detects multipath from the mobile device 71 on the basis of the delay profile, a demodulation portion 16 retrieves and synthesizes desired signals from signals that are received via the detected multipath, and a baseband processing portion 17 executes processing to identify and decode data on the basis of the synthesized signal. The reception timing determination portion 12, data reception portion 13, delay profile creation portion 14, and path detection portion 15 form a path search circuit.

During handover, the reception timing determination portion 12 determines the reception timings of data that are transmitted by a mobile device via cells that are associated with the handover on the basis of control by the handover control portion 18, whereupon the delay profile creation portion 14 creates delay profiles on the basis of data that is received from each of the cells at the respective reception timings and the path detection portion 15 detects paths with a large amount of power from all of the delay profiles thus created.

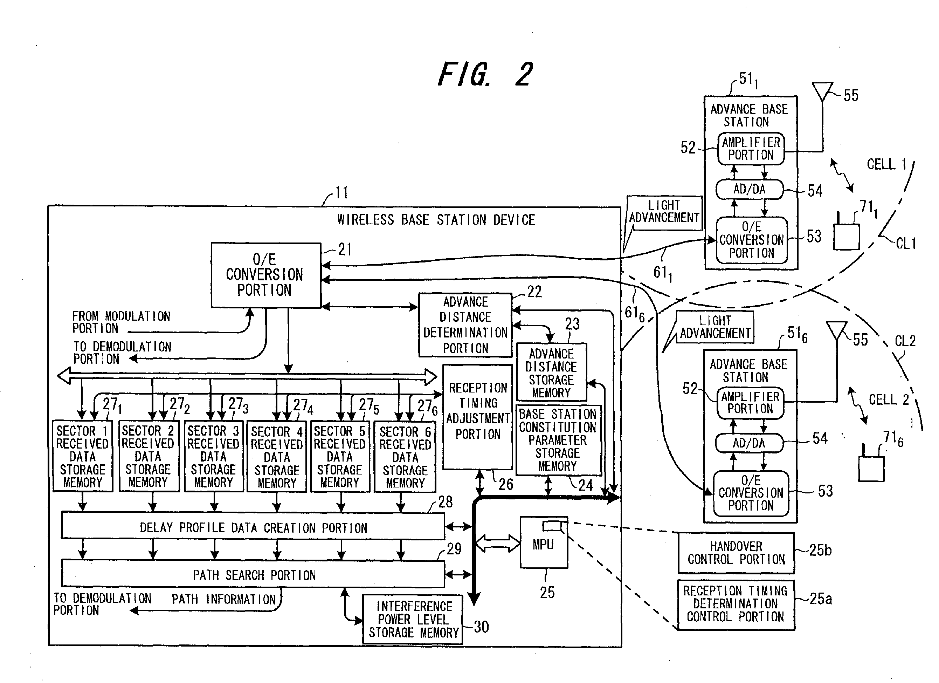

Fig. 2 shows the constitution of the wireless base station device of the present invention. Advance base stations

$51_1$ to $51_6$ are communicably connected to the wireless base station device 11 in both directions by means of fiber-optic cables $61_1$ to $61_6$. The respective advance base stations $51_1$ to $51_6$ have the same constitution and comprise a transceiver portion 52 that comprises an amplifier portion; an O/E conversion portion 53 that performs a conversion from an optical signal to an electrical signal and a conversion from an electrical signal to an optical signal and an AD/DA conversion portion 54 that AD-converts an antenna reception signal and converts data that have been sent by the wireless base station device 11 into an analog signal; and an antenna 55. Each of the advance base stations $51_1$ to $51_6$ produces a fiber-optic signal after converting a signal that is received from the mobile devices $71_1$ to $71_6$ into a digital signal and then sends this fiber-optic signal to the wireless base station device 11. Each of the advance base stations $51_1$ to $51_6$ also converts a signal that is received from the wireless base station device 11 into an electrical signal before converting this electrical signal into the analog signal and sending same to the mobile devices $71_1$ to $71_6$.

In the wireless base station device 11, an O/E conversion portion 21 captures signals by converting fiber-optic signals that are inputted via the fiber-optic cables $61_1$ to $61_6$ into electrical signals and converts digital data inputted from a modulation portion (not shown) into fiber-optic signals before sending same to the fiber-optic cables.

An advance distance measurement portion 22 measures the cable lengths between the wireless base station device 11 and each of the advance base stations $51_1$ to $51_6$ as the advance distance $d_i$ on the basis of a well-known method (TDR method or OTDR method, or the like) that is widely used for cable length measurement, and stores the cable lengths in an advance distance storage memory 23. The measurement of the advance distances is performed at fixed intervals and the advance distance storage memory 23 is updated continually with the latest values. A base station constitution parameter storage memory 24 stores base station installation information (the cell radius of each of cells CL1 to CL6, the reception start timings of each channel, and the current number of users of each cell, and the like).

An MPU 25 performs control to determine the data start timings and handover control, and so forth. The reception timing determination control portion 25a of the MPU 25 uses the advance distances, cell radii, and the channel reception start timings when the data start timings are determined to calculate the reception timing and range (reception timing intervals) for each channel of each cell. Now, supposing that the reception timing of channel 1 that is allocated to the mobile device $71_1$ which exists in first cell CL1 is $T_{11}$, the advance distance (round-trip) of the first cell CL1 is $d_1$, and the cell radius (round-trip) is $CELL_1$, the actual reception start timing $Tstart_{11}$ and reception end timing $Tend_{11}$ can be calculated by means of the following equations:

$$Tstart_{11} = T_{11} + t(d_1) \quad \cdots\cdots\cdots\cdots (1)$$

$$Tend_{11} = T_{11} + t(d_1) = t(CELL_1) \quad \cdots\cdots\cdots (2),$$

where $t(d_1)$ is a function that converts the advance distance $d_1$ into a delay time and $t(CELL_1)$ is a function that converts the cell radius $CELL_1$ into the delay time. The characters "11" appended to each variable indicate that this is the parameter of the first channel of the first CL1. When the MPU 25 finds the reception start timing $Tstart_{11}$ and the reception end timing $Tend_{11}$, the MPU 25 sends these times together with cell information and channel information to a reception timing adjustment portion 26. The reception timing adjustment portion 26 starts data reception for channel 1 of the first cell CL1 on the basis of the reception start timing $Tstart_{11}$ thus calculated by the MPU 25 and ends data reception on the basis of the reception end timing $Tend_{11}$ before storing the received data in a region of channel 1 of the received data storage memory $27_1$ of the first cell CL1. Similarly, the MPU 25 determines the reception timings for all the channels of all the cells and controls the storage of the received data in the received data storage memories $27_1$ to $27_6$.

A delay profile data generation portion 28 uses received data of a jth channel of an ith cell (where i=1 to 6, j=1 to $u_i$, and $u_i$ is the number of users of the ith cell) that is stored in each of the received data storage memories $27_1$, to $27_6$ to create a delay profile and inputs the delay profile to a path search portion 29. The path search portion 29 detects a predetermined number of (=number of fingers) peaks at or more than the threshold value as multipath from the inputted delay profile and inputs path information (path times and so forth) to the demodulation portion (not shown). The path search portion 29 calculates the average interference power level of the delay profile when performing path detection, subtracts the average interference power level from each peak power level and selects a predetermined number of peaks with a peak power level equal to or more than the threshold value in order of size, whereby multipath is established. Further, the path search portion 29 calculates the latest average interference power level of each cell and stores these values in the interference power level storage memory 30.

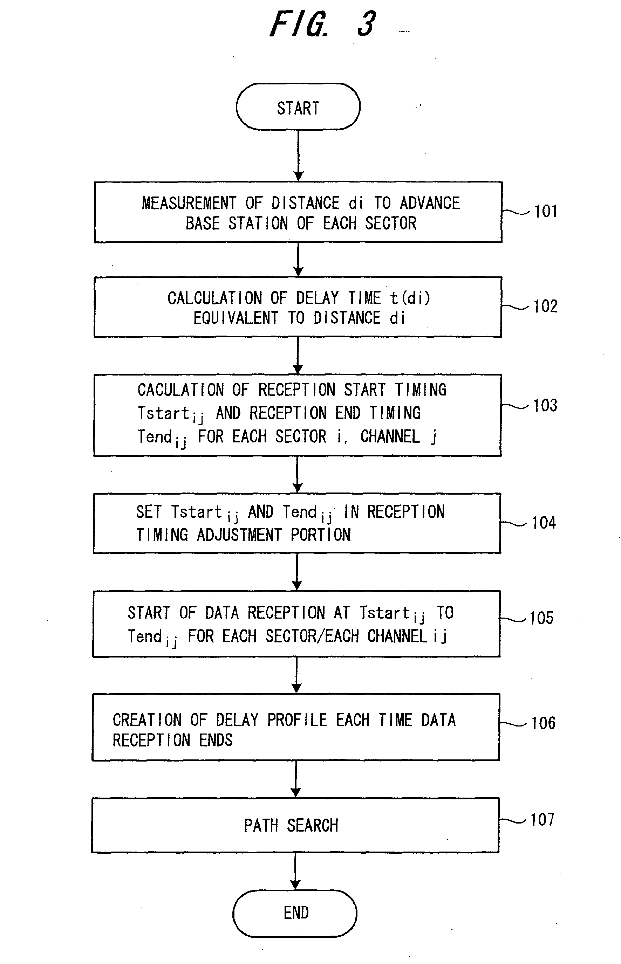

Fig. 3 shows the processing flow of data reception.

The advance distance measurement portion 22 measures the cable lengths between the wireless base station device 11 and each of the advance base stations $51_1$ to $51_6$ as the advance distance $d_i$ (where i = 1 to 6), and the reception timing determination control portion 25a of the MPU 25 measures the delay time $t(d_1)$ that corresponds with the advance distance $d_i$ (step 102), computes the reception start timing $Tstart_{ij}$ and reception end timing $Tend_{ij}$ of the jth channel of the ith cell (where i=1 to 6, j=1 to $u_j$ and $u_i$ is the number of users of the ith cell) by means of Equations (1) and (2) (step 103), and sets the computation result in the reception timing adjustment portion 26 (step 104).

The reception timing adjustment portion 26 starts data reception on the basis of the reception start timing $Tstart_{ij}$ for the jth channel of the ith cell, ends data reception on the basis of the reception end timing $Tend_{ij}$ and stores the received data in a region that corresponds with channel j in the received data storage memory $27_1$ of cell i. Likewise, the reception timing adjustment portion 26 determines the reception timing for all of the channels of all the cells and performs control to store the received data in the received data storage memories $27_1$ to $27_6$ (step 105).

The delay profile data generation portion 28 creates a delay profile by using received data of the jth channel of the ith cell that is stored in each of the received data storage memories $27_1$ to $27_6$ (step 106) and the path search portion 29 detects multipath on the basis of the delay profile inputted thereto (step 107) and inputs path information (path times, and the like) to a demodulation portion (not shown).

According to the first embodiment example, after the delay period corresponding with the advance distance, cell radius, and so forth, has been removed from the data reception timing, the data reception period can be shortened and the delay profile time interval, that is, the path search range, can be narrowed to lighten the processing load. As a result, path detection processing can be lightened and an increase in the circuit scale, a reduction in the number of accommodated channels, and so forth, can be prevented.

(B) Second embodiment

The first embodiment example involves path search control during normal reception but requires path search control during handover that is somewhat different from path search control during normal reception. This is because the path search portion 29 must detect multipath by considering all the cells that are associated with the handover (movement source cell and movement destination candidate cell). That is, the path search portion 29 creates delay profiles by receiving transmission data from a mobile device that is undergoing handover from all the cells that are associated with the handover and must detect multipath by considering all of the delay profiles created.

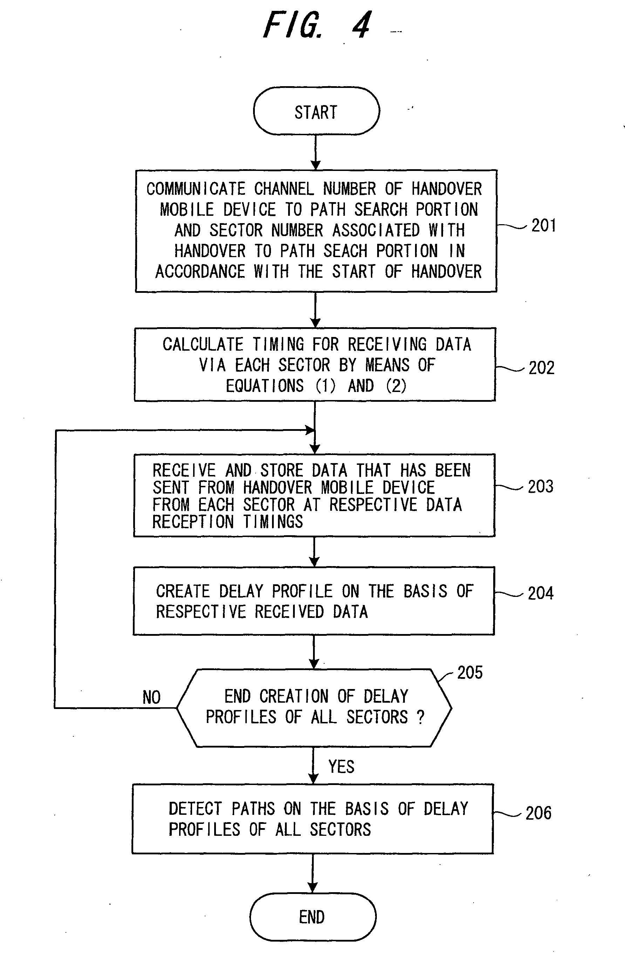

Fig. 4 shows the processing flow of a path search during handover.

For example, when the mobile device $71_1$, which is communicating in the first cell CL1, is approaching the boundary between the first cell CL1 and sixth cell CL6, commonly known handover control begins and the cell numbers of the cells that are associated with the handover and the channel numbers allocated to the mobile device $71_1$ in the cells are communicated to the MPU 25. As a result, the handover control portion 25b of the MPU 25 communicates the cell numbers of the cells (first and sixth cells)that are associated with the handover of the mobile device $71_1$ and the channel numbers to the path search portion 29 (step 201). Thereafter, the reception timing determination control portion 25a of the MPU 25 calculates the timings at which data transmitted by the mobile device $71_1$ is received from each of the first cell CL1 and the sixth cell CL6 on the basis of equations (1), (2) and sets the respective reception timings in the reception timing adjustment portion 26 (step 202) .

The reception timing adjustment portion 26 receives data on the basis of the respective reception timings of the channels allocated to the mobile device $71_1$ in the first cell and the channel allocated to the mobile device $71_1$ in the sixth cell and stores the received data in regions that correspond with the channels of the received data storage memories $27_1$ and $27_6$ (step 203).

The delay profile data generation portion 28 creates respective delay profiles by using the received data for the channels of the mobile device $71_1$ that is stored in each of the memories $27_1$ and $27_6$ (step 204).

The path search portion 29 checks whether the creation of delay profiles for the channels of the mobile device $71_1$ in the first and sixth cells communicated in step 201 is complete (step 205). If delay profile creation is complete, the path search portion 29 detects multipath on the basis of two delay profiles (step 206) and inputs path information (path times and so forth) to the demodulation portion (not shown). The path detection control above is performed until handover is complete.

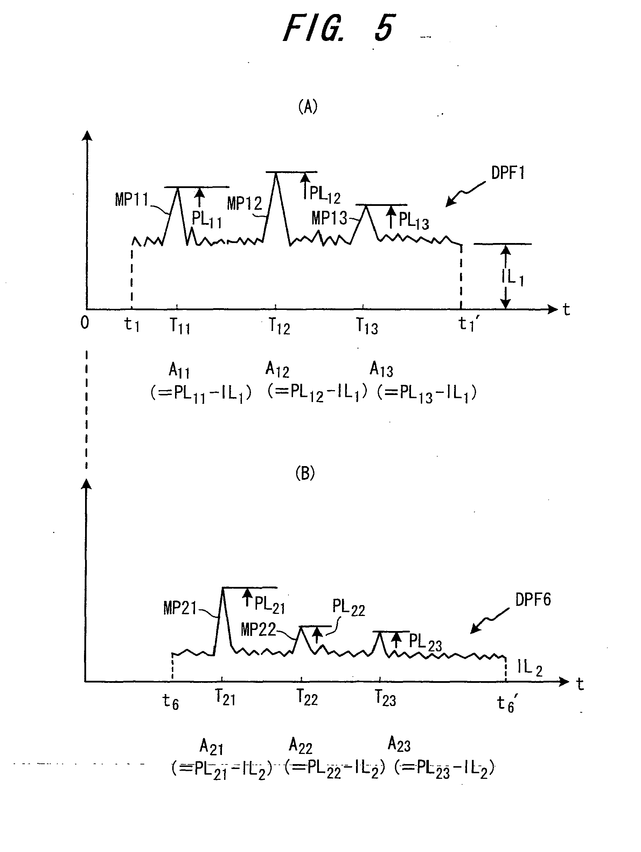

Fig. 5 illustrates path detection processing, wherein Fig. 5A shows the delay profile DPF1 of the channel allocated to the mobile device in the first cell (the delay profile when the signal from the mobile device $71_1$ is received via the first cell) and Fig. 5B is the delay profile DPF6 of the channel allocated to the mobile device in the sixth cell (the delay profile when the signal from mobile device $71_1$ is received via the sixth cell), where $t_1$ to $t_1'$ are the reception timings of the channel of the first cell and $t_6$ to $t_6'$ are the reception timings of the channel of the sixth cell. When both the delay profiles DPF1 and DPF6 have been created, the path search portion 29 first calculates the reception timings $T_{11}$ to $T_{13}$ at the peaks, and the peak power level $PL_{11}$ to $PL_{13}$ and average interference power level $IL_1$ with respect to the first delay profile DPF1. Thereafter, the net power levels $A_{11}$ to $A_{13}$ at the peaks are calculated by subtracting the average interference power level $IL_1$ from the respective peak power levels $PL_{11}$ to $PL_{13}$. Likewise, the path search portion 29 calculates the reception timings $T_{21}$ to $T_{23}$ at the peaks, and the peak power levels $PL_{21}$ to $PL_{23}$ and average interference

power level $IL_2$ with respect to the second delay profile DPF6. Thereafter, the path search portion 29 calculates the net power levels $A_{21}$ to $A_{23}$ at the peaks by subtracting the average interference power level $IL_2$ from each of the peak power levels $PL_{21}$ to $PL_{23}$.

Once the net power levels at the peaks of all the delay profiles have been found, a predetermined number (=number of fingers) of power levels are chosen in order of size from among the net power levels $A_{11}$ to $A_{13}$ and $A_{21}$ to $A_{23}$ and paths are detected with the timings at the peaks corresponding with the chosen power levels constituting the multipath times.

According to the second embodiment example, unnecessary data reception and processing, and so forth, can be reduced by considering delay times that correspond with the advance distances and cell radii that are specific to each cell, even during handover, whereby the processing load can be lightened and an increase in the circuit scale, a reduction in the number of accommodated channels, and the like, can be prevented.

(C) Third embodiment

In a cell constitution in which advance base stations are installed, during a handover, as illustrated in the second embodiment example, paths with favorable S/N must be sequentially selected from all the cells that are associated with the handover. As a result, unless the delay profile data of all cells have been gathered, the path detection processing cannot be started. That is, the path search portion 29 performs path detection after the delay profiles of all the cells that are associated with the handover have been gathered. However, because the data reception timings from the cells are different, it takes time to gather all of the delay profile data. In particular, in cases where there is a large difference in the delay times determined from the advance distance and cell radius, it takes a long while to gather all of the delay profiles. For example, when handover processing is performed between the first cell 1T1 and the sixth cell CL6, supposing that the advance distance of the first cell CL1 is greater than that of the sixth cell CL6, equations (1) and (2) yield a difference at the timing when generation of the delay profile data is complete and the timing at which the path information is ultimately handed over to the demodulation portion is dependent on the first cell with a long advance distance. Therefore, meanwhile, the path search portion 29 is unable to perform processing of the other channels and the operating efficiency drops. Therefore, when there is a large difference in the delay times, control is required to shorten the time required for the generation of delay profile data and path detection, and so forth, of the larger delay times in order to reduce the hardware occupancy ratio per channel.

In the third embodiment example, the respective reception timings are referenced and the difference between the timing at which the very first delay profile is generated and the timing at which another delay profile is generated is computed and, when this difference is equal to or more than a set value, control is performed to shorten the total processing time for delay profile creation and path detection. More specifically, when this difference is equal to or more than the set value, for larger delay times:

(1) the delay profile computation time is shortened by reducing the number of oversamples; and
(2) the path search computation time is shortened by using values in the interference power level storage memories without calculating the average interference power level in a path search. Further, if the number of users in the cells is substantially the same, the average interference power level does not change significantly.

The delay profile data generation portion 28 performs control of the number of oversamples. if the number of oversamples is halved, the time taken by the delay profile creation processing can be halved. Further, the path search portion 29 controls usage of the stored interference power level values. The path search portion 29 normally calculates the average interference power level from the delay profile data. However, the path detection time can be shortened by using the interference power level values stored in the interference power level storage memory 30 by indicating such values.

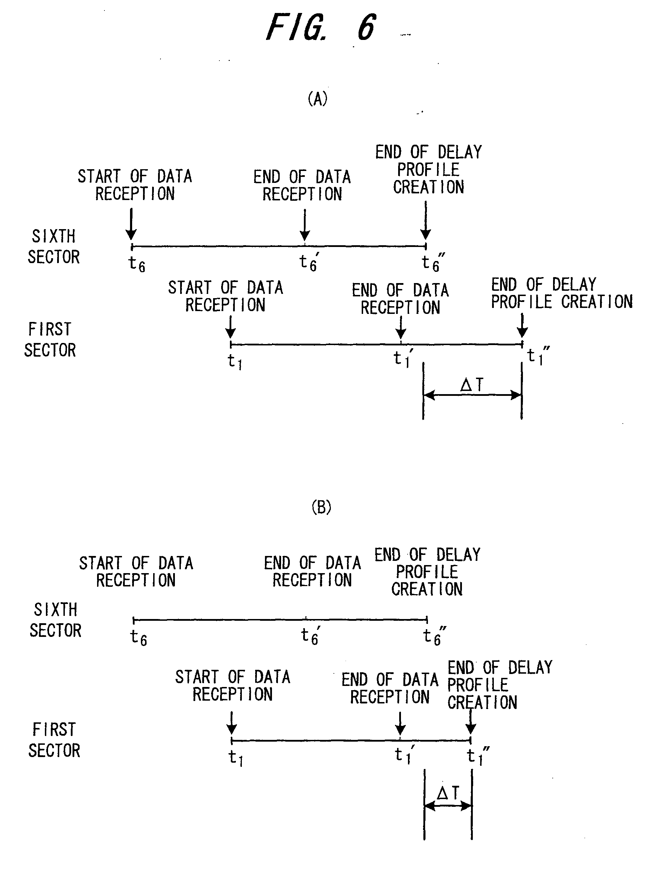

Fig. 6 illustrates a delay profile creation end timing difference $\Delta T$ in a case (A) where the processing time is not shortened during handover and in a case (B) where the processing time is shortened during handover. When the processing time is not shortened during handover, a large delay profile creation end timing difference $\Delta T$ that corresponds with the delay time is generated, as shown in Fig. 6A. Further, $t_6$ to $t_6'$ are data reception timings from the sixth cell, $t_6''$ is the delay profile creation end timing, $t_1$ to $t_1'$ are data reception timings from the first cell, and $t_1''$ is the delay profile creation end timing.

However, if the delay profile creation and path search processing time is shortened by means of (1), (2) above during handover, as shown in Fig. 6B, the delay profile creation end timing $t_1''$ of the first cell is early and the delay profile creation end timing difference $\Delta T$ is short in comparison with that of Fig. 6A. As a result, the hardware occupancy ratio of each channel can be lowered, and the disadvantage of introducing advance base stations can be lessened.

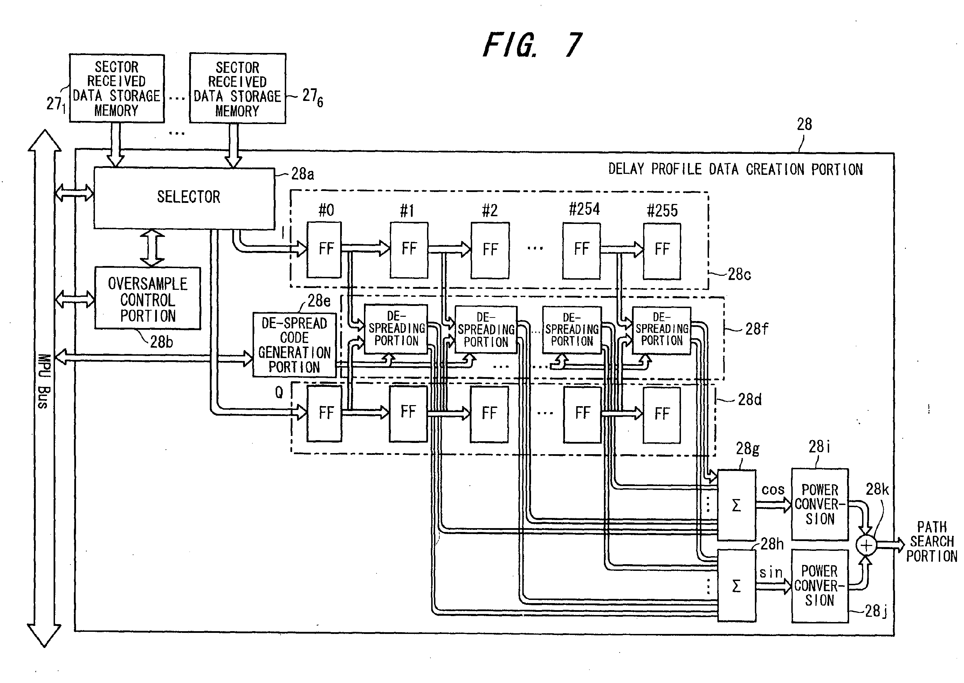

Fig. 7 shows the constitution of the delay profile data generation portion 28 of the third embodiment example. The selector 28a sequentially selects the received data of each channel of each cell from the received data storage

memories $27_1$ to $27_6$ in sequence and reduces and outputs the number of oversamples of received data of a predetermined channel in a predetermined cell that is indicated by an oversample control portion 28b. For example, the received data is oversampled by a multiple of eight by means of the AD/DA conversion portion 54 of the advance base station and, therefore, when a reduction in the number of samples is indicated by the oversample control portion 28b, the selector 28b thins and outputs the data to produce oversample data of a multiple of four. The oversample control portion 28b instructs the selector 28a to produce oversamples in a multiple of four from the oversamples in a multiple of eight with respect to a predetermined channel in a predetermined cell that is indicated by the handover control portion 25b of the MPU 25 (Fig. 1).

A first shift register 28c with 256 stages stores in-phase components I of received data of 256 bits while shifting the data one bit at a time and a second shift register 28d with 256 stages stores quadrature components Q of the received data of 256 bits while shifting the data one bit at a time. A de-spread code generation portion 28e generates de-spread code of 256 chips and a multiplication portion 28f multiplies 256-chip spread code and 256 in-phase components I, and multiplies and outputs 256-chip spread code and 256 quadrature components Q. A synthesis portion 28g synthesizes the multiplication results of the 256 spread codes and 256 in-phase components I and performs conversion to electrical power by means of the electrical power conversion portion 28i. Further, a synthesis portion 28h synthesizes the result of multiplying the 256 spread codes and the 256 quadrature components Q and performs conversion to electrical power by means of the electrical power conversion portion 28j. Delay profile data of a time at which an adder 28k has added the outputs of each of the power conversion portions 28i and 28j are then outputted.

Therefore, the delay profile data can be created by performing the above-mentioned computation while the in-phase and quadrature components of the received data are shifted one bit at a time by the first and second shift registers 28c and 28d respectively. Thereafter, the delay profile computation time can be halved by reducing the number of oversamples from a multiple of eight to a multiple of four.

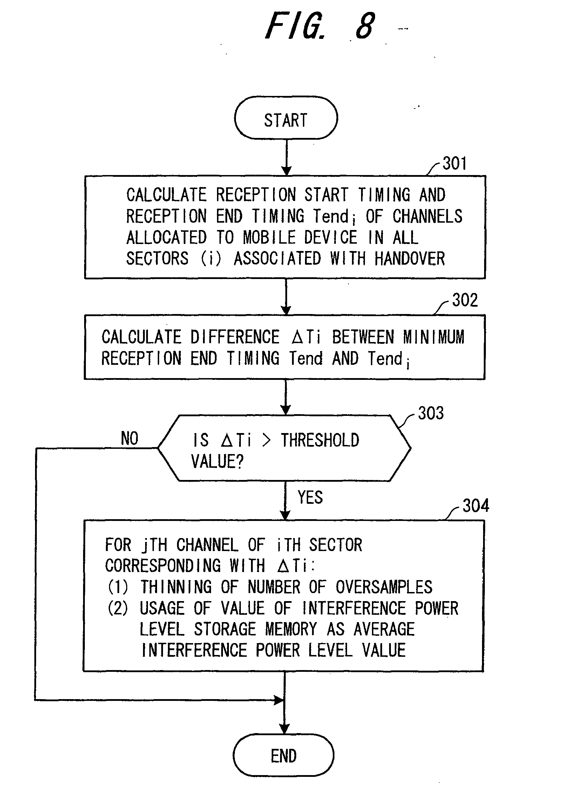

Fig. 8 shows the processing time control flow of the third embodiment example.

First, the MPU 25 calculates the timing for receiving the data (reception start timing, reception end timing) of a mobile device that is undergoing handover from each cell that is associated with the handover from the equations (1), (2) (step 301). Thereafter, the MPU 25 calculates the time difference $\Delta Ti$ between the reception end timing Tend (min) of the cell for which the delay profile data was generated first and the reception end timing Tendi of the other cells by means of the following equation:

$$\Delta\texttt{Ti=Tendi-Tend(min) (step 302)}.$$

The MPU 25 then checks whether a cell for which $\Delta Ti$ is equal to or more than a threshold value exists (step S303) and ends the processing if no such cell exists. On the other hand, if an ith cell for which $\Delta Ti$ is equal to or more than the threshold value exists, the MPU 25 determines the processing time for delay profile creation and path detection for the channel allocated to the mobile device in the ith cell be shortened and communicates this fact to the delay profile data generation portion 28 and the path search portion 29 (step 304). As a result, the delay profile data generation portion 28 reduces the number of oversamples for the channel of the ith cell from a multiple of eight to a multiple of four and the path search portion 29 uses a value that is stored in the interference power level storage memory 30 as the average interference power level value.

According to the third embodiment example, the speed of the data processing time during handover between advance base stations can be increased, whereby the hardware occupancy ratio per channel can be lowered.

(D) Fourth embodiment

The fourth embodiment example manages the channels undergoing handover and the response of the cells that are associated with the handover and performs path detection when the delay profiles of all the channels associated with a predetermined handover have all been gathered.

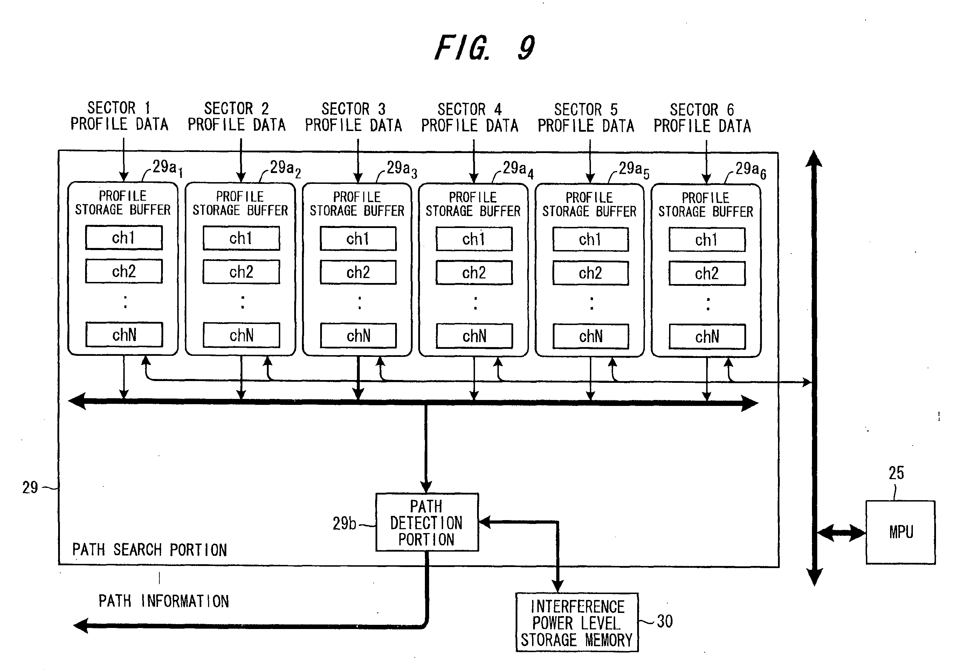

Fig. 9 shows the constitution of the path search portion 29 that implements the fourth embodiment example in which profile data storage memories $29a_1$ to $29a_6$ for storing delay profile data of N channels for each cell and a path detection portion 29b are mounted.

The MPU 25 stores data that has flowed to each cell from the delay profile data generation portion 28 in a vacant channel region of the profile data storage memories $29a_1$ to $29a_6$ and, if the data is that of a mobile device undergoing handover, manages the link with the channels associated with the handover (cell 1: ch1 and cell 5: ch8, and so forth, for example). Further, the MPU 25 monitors whether the delay profile data of all the channels associated with the handover have been gathered and transfers the delay profile data from all the gathered channels to the path detection portion 29b, whereupon the path detection portion 29b executes path detection by using the plurality of delay profile data thus transferred.

According to the fourth embodiment example, the occupancy ratio per channel of the path search portion can be lowered.

(E) Fifth embodiment

If a plurality of the advance base stations, that is, cells, is arranged in the form of a straight line within a tunnel, the number of users per channel in each cell can be estimated. However, in reality, this does not mean that there is that number of users and full usage cannot be considered at first. Further, the optical fiber cables must then be laid in parallel, which is wasteful. In addition, a case where the desire exists to arrange the cells in series, not only within a tunnel, but also along a road and to arrange the cells in series in stages within a high-rise building, and so forth, is similar.

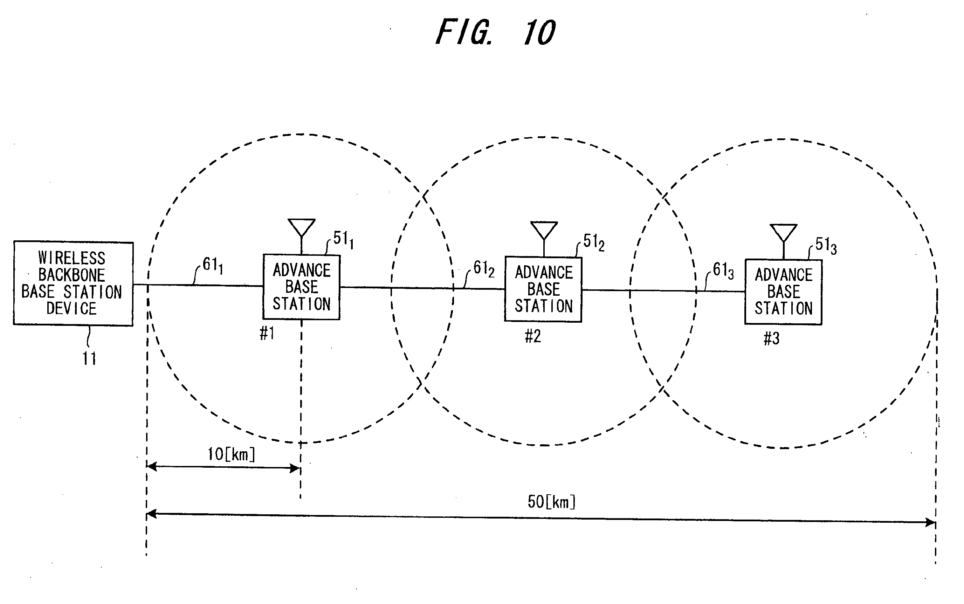

A fifth embodiment example makes active use in this case of the resources of the wireless backbone base station device 11 by cascade-connecting advance base stations $51_1$, $51_2$, $51_3$ ... by means of fiber-optic cables $61_1$, $61_2$, $61_3$ ... , as shown in Fig. 10. Fig. 10 is an example in which the cell radius of the wireless backbone base station 11 is set at 50 km and the cell radius of each of the advance base stations $51_1$, $51_2$, $51_3$ ... is set at 10 km.

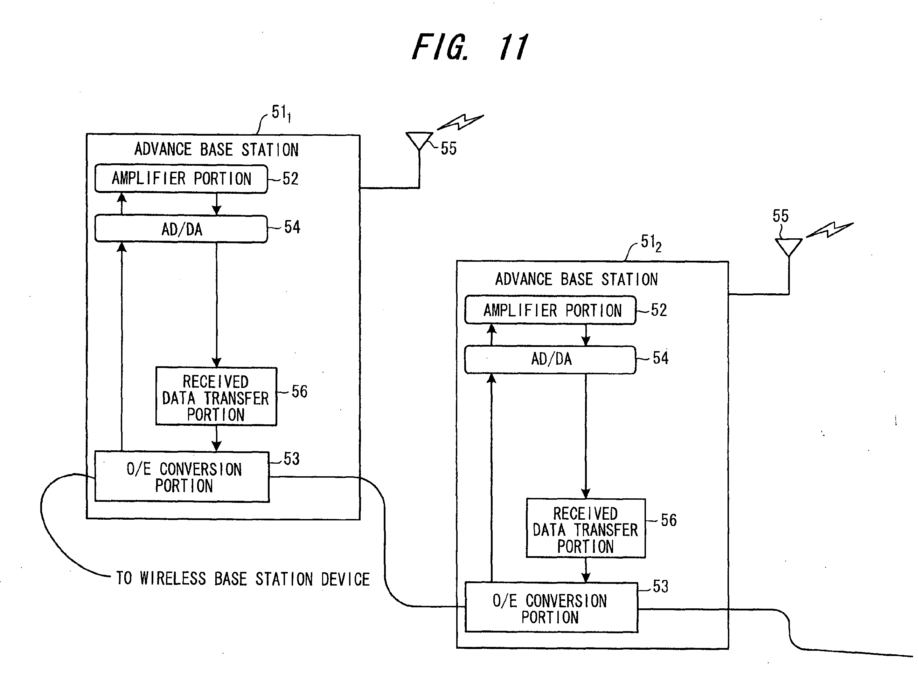

Fig. 11 shows the constitution of an advance base station in which a received data transfer portion 56 has been added to the advance base station constitution in Fig. 1. The recession data transfer portion 56 performs transmission to the wireless backbone base station device 11 by adding a header to the data, the header making it possible to identify which of the advance base stations the data is from.

If downlink data is received from the wireless backbone base station device 11, the O/E conversion portion 53 of each of the advance base stations captures the downlink data and transmits same by means of an antenna, sending the downlink data through to the advance base station of the next stage. Further, if uplink data is received from a lower order advance base station, the O/E conversion portion 53 of the advance base station then sends the uplink data as is through to the wireless backbone base station device 11.

As detailed above, if a plurality of advance base stations is cascade-connected, the number of users corresponding with one cell is covered by a plurality of advance base stations. Therefore, the resources of the wireless backbone base station 11 are not wasted. Further, supposing that three advance base stations can be cascade-connected and six advance base stations can be connected in series to the wireless backbone base station device 11, substantially 18 advance base stations can then be installed. As a result, one advance base station can then be installed in each floor of the building, for example.

In the above embodiment example, the present invention was applied to a Rake receiver that performed a multipath search and retrieved and synthesized desired signals from the signals received via the respective paths. The present invention can also be applied to a case where one path is detected and data is demodulated by means of a signal that is received via this path.

As many apparently widely different embodiments of the present invention can be made without departing from the spirit and scope thereof, it is to be understood that the invention is not limited to the specific embodiments thereof except as defined in the appended claims.

**Claims**

1. A wireless base station device that communicates with a mobile device via an advance base station, comprising:

   a reception timing determination portion that determines reception timing of data that is transmitted by a mobile device that exists in a cell of the advance base station on the basis of the distance between the wireless base station device and the advance base station and the cell radius of the advance base station;
   a data reception portion that receives data from the mobile device by performing a reception operation at the reception timing;
   a delay profile creation portion that creates a delay profile on the basis of the received data;
   a path detection portion that detects paths from the mobile device on the basis of the delay profile; and
   a demodulation portion that demodulates data from signals received via the detected paths.

2. The wireless base station device according to claim 1, comprising:

   means for measuring the distance between the wireless base station device and the advance base station; and
   a memory for storing the radius of the cell of each advance base station and the reception timing of a channel that is allocated to the mobile device that exists in each cell,
   wherein the reception timing determination portion determines the reception start timing and reception end timing for each channel on the basis of the distance, cell radius, and channel reception timing.

3. The wireless base station device according to claim 1, wherein the advance base station includes an advance base station that is cascade-connected to the advance base station.

4. The wireless base station device according to claims 1 to 3, comprising:

a handover control portion that controls handover that is implemented in accordance with movement of the mobile device,
wherein the reception timing determination portion determines, on the basis of control by the handover control portion, the reception timing of data transmitted by the mobile device via each of the cells associated with the handover;
the delay profile creation portion creates delay profiles on the basis of data received from each cell at said respective reception timings; and
the path detection portion detects paths of large power from all of said delay profiles.

5. The wireless base station device according to claim 4, wherein the handover control portion references the respective reception timings and calculates the difference between the timing at which the delay profile was generated first and the timing at which another delay profile was generated and, when the difference is equal to or more than a set value, implements control to shorten the total processing time for delay profile creation and path detection.

6. The wireless base station device according to claim 5, wherein the handover control portion reduces the number of oversamples of received data such that the delay profile creation time is shortened.

7. The wireless base station device according to claim 5, wherein a memory for storing interference power is provided for each cell; and
the handover control portion shortens the processing time for path detection by using the interference power stored in the memory instead of calculating an average interference power.

8. The wireless base station device according to claim 4,
wherein the handover control portion manages the channels of all the cells of the mobile device undergoing handover and detects the paths from the mobile device for which the delay profiles of all the channels have been gathered.

9. A path search circuit of a wireless base station device that communicates with a mobile device via an advance base station, detects paths from the mobile device to the advance base station, and demodulates data from signals received via the paths, comprising:

a reception timing determination portion that determines reception timing of data that is transmitted by a mobile device that exists in a cell of the advance base station on the basis of the distance between the wireless base station device and the advance base station and the cell radius of the advance base station;
a data reception portion that receives data from the mobile device by performing a reception operation at the reception timing;
a delay profile creation portion that creates a delay profile on the basis of the received data; and
a path detection portion that detects paths from the mobile device on the basis of the delay profile.

10. The path search circuit according to claim 9, comprising:

means for measuring the distance between the wireless base station device and the advance base station; and
a memory for storing the radius of the cell of each advance base station and the reception timing of a channel that is allocated to the mobile device that exists in each cell,
wherein the reception timing determination portion determines the reception start timing and reception end timing for each channel on the basis of the distance, cell radius, and channel reception timing.

11. The path search circuit according to claim 9 or 10, comprising:

a handover control portion that controls handover that is implemented in accordance with movement of the mobile device,
wherein the reception timing determination portion determines, on the basis of control by the handover control portion, the reception timing of data transmitted by the mobile device via each of the cells associated with the handover;

the delay profile creation portion creates delay profiles on the basis of data received from each cell at said respective reception timings; and

the path detection portion detects paths of large power from all of said delay profiles.

12. The path search circuit according to claim 11, wherein the handover control portion references the respective reception timings and calculates the difference between the timing at which the delay profile was generated first and the timing when another delay profile was generated and, when the difference is equal to or more than a set value, implements control to shorten the total processing time for delay profile creation and path detection.

13. The path search circuit according to claim 11, wherein the handover control portion manages the channels of all the cells of the mobile device undergoing handover and detects the paths from the mobile device for which the delay profiles of all the channels have been gathered.

14. A path search method of a wireless base station device that communicates with a mobile device via an advance base station, detects paths from the mobile device to the advance base station, and demodulates data from signals received via the paths, comprising the steps of:

determining the reception timing of data that is transmitted by a mobile device that exists in a cell of the advance base station on the basis of the distance between the wireless base station device and the advance base station and the cell radius of the advance base station;

receiving data from the mobile device by performing a reception operation at the reception timing; and creating a delay profile on the basis of the received data;

detecting paths from the mobile device on the basis of the delay profile.

15. The path search method according to claim 14, comprising the steps of:

pre-storing the cell radius of each of the advance base stations and the reception timings of channels allocated to mobile devices that exist in each cell to memory;

measuring the distance between the wireless base station device and the advance base stations; and determining a data reception start timing and a data reception end timing for each channel on the basis of the distance, the cell radius, and the channel reception timings.

16. The path search method according to claim 14 or 15, comprising the steps of:

determining, during a handover that is implemented in accordance with movement of a mobile device, the reception timings of data transmitted by the mobile device via each of the cells that are associated with the handover;

performing a reception operation from each of the cells at the reception timings;

creating a delay profile on the basis of each of the received data; and

detecting paths of large power from all of said delay profiles.

17. The path search method according to claim 16, comprising the steps of:

computing the difference between the timing at which the delay profile was created first and the timing at which another delay profile was created by referencing the respective reception timings; and, when the difference is equal to or more than a set value, implementing control to shorten the total processing time of delay profile creation and path detection.

18. The path search method according to claim 17, comprising the step of:

shortening the delay profile creation time by reducing the number of oversamples of received data.

19. The path search method according to claim 17, comprising the step of:

providing a memory for storing interference power for each of the advance base stations; and shortening the processing time for path detection by using the interference power that is stored in the memory instead of calculating an average interference power.

**20.** The path search method according to claim 16, comprising the step of:

managing the channels of all the cells of the mobile device undergoing handover and detecting the paths from the mobile device for which the delay profiles of all the channels have all been gathered.

# FIG. 1

DATA RECEPTION PORTION — 13

RECEPTION TIMING DETERMINATION PORTION — 12

DELAY PROFILE CREATION PORTION — 14

HANDOVER CONTROL PORTION — 18

PATH DETECTION PORTION — 15

PATH SEARCH CIRCUIT

DEMODULATION PORTION — 16

BASEBAND PROCESSING PORTION — 17

WIRELESS BASE STATION DEVICE — 11

FIG. 2

WIRELESS BASE STATION DEVICE — 11

O/E CONVERSION PORTION — 21

FROM MODULATION PORTION

TO DEMODULATION PORTION

ADVANCE DISTANCE DETERMINATION PORTION — 22

ADVANCE DISTANCE STORAGE MEMORY — 23

RECEPTION TIMING ADJUSTMENT PORTION

BASE STATION CONSTITUTION PARAMETER STORAGE MEMORY — 24

$27_1$ SECTOR 1 RECEIVED DATA STORAGE MEMORY
$27_2$ SECTOR 2 RECEIVED DATA STORAGE MEMORY
$27_3$ SECTOR 3 RECEIVED DATA STORAGE MEMORY
$27_4$ SECTOR 4 RECEIVED DATA STORAGE MEMORY
$27_5$ SECTOR 5 RECEIVED DATA STORAGE MEMORY
$27_6$ SECTOR 6 RECEIVED DATA STORAGE MEMORY

— 26

DELAY PROFILE DATA CREATION PORTION — 28

PATH SEARCH PORTION — 29

MPU — 25

TO DEMODULATION PORTION

PATH INFORMATION

INTERFERENCE POWER LEVEL STORAGE MEMORY — 30

$51_1$ ADVANCE BASE STATION
52 — AMPLIFIER PORTION
AD/DA — 54
O/E CONVERSION PORTION — 53
55
$71_1$
CELL 1
CL1

LIGHT ADVANCEMENT

$61_1$
$61_6$

LIGHT ADVANCEMENT

$51_6$ ADVANCE BASE STATION
52 — AMPLIFIER PORTION
AD/DA — 54
O/E CONVERSION PORTION — 53
55
$71_6$
CELL 2
CL2

HANDOVER CONTROL PORTION — 25b

RECEPTION TIMING DETERMINATION CONTROL PORTION — 25a

EP 1 643 790 A2

# FIG. 3

START

MEASUREMENT OF DISTANCE di TO ADVANCE BASE STATION OF EACH SECTOR — 101

CALCULATION OF DELAY TIME t(di) EQUIVALENT TO DISTANCE di — 102

CACULATION OF RECEPTION START TIMING $Tstart_{ij}$ AND RECEPTION END TIMING $Tend_{ij}$ FOR EACH SECTOR i, CHANNEL j — 103

SET $Tstart_{ij}$ AND $Tend_{ij}$ IN RECEPTION TIMING ADJUSTMENT PORTION — 104

START OF DATA RECEPTION AT $Tstart_{ij}$ TO $Tend_{ij}$ FOR EACH SECTOR/EACH CHANNEL ij — 105

CREATION OF DELAY PROFILE EACH TIME DATA RECEPTION ENDS — 106

PATH SEARCH — 107

END

# FIG. 4

```
        ┌─────────┐
        │  START  │
        └─────────┘
             │
             ▼
┌─────────────────────────────────────┐
│ COMMUNICATE CHANNEL NUMBER OF HANDOVER │
│ MOBILE DEVICE TO PATH SEARCH PORTION   │      201
│ AND SECTOR NUMBER ASSOCIATED WITH      │
│ HANDOVER TO PATH SEACH PORTION IN      │
│ ACCORDANCE WITH THE START OF HANDOVER  │
└─────────────────────────────────────┘
             │
             ▼
┌─────────────────────────────────────┐
│   CALCULATE TIMING FOR RECEIVING DATA │
│        VIA EACH SECTOR BY MEANS OF    │      202
│         EQUATIONS (1) AND (2)         │
└─────────────────────────────────────┘
             │
             ▼
┌─────────────────────────────────────┐
│  RECEIVE AND STORE DATA THAT HAS BEEN │
│  SENT FROM HANDOVER MOBILE DEVICE     │      203
│  FROM EACH SECTOR AT RESPECTIVE DATA  │
│  RECEPTION TIMINGS                    │
└─────────────────────────────────────┘
             │
             ▼
┌─────────────────────────────────────┐
│  CREATE DELAY PROFILE ON THE BASIS OF │      204
│  RESPECTIVE RECEIVED DATA             │
└─────────────────────────────────────┘
             │
             ▼
        ╱─────────────────────╲           205
  NO   ╱   END CREATION OF DELAY ╲
◄──────┤  PROFILES OF ALL SECTORS ?│
        ╲─────────────────────╱
             │ YES
             ▼
┌─────────────────────────────────────┐
│  DETECT PATHS ON THE BASIS OF DELAY   │      206
│  PROFILES OF ALL SECTORS             │
└─────────────────────────────────────┘
             │
             ▼
        ┌─────────┐
        │   END   │
        └─────────┘
```

# FIG. 5

(A)

$A_{11}$
$(=PL_{11}-IL_1)$  $(=PL_{12}-IL_1)$ $(=PL_{13}-IL_1)$
$A_{12}$  $A_{13}$

(B)

$A_{21}$  $A_{22}$  $A_{23}$
$(=PL_{21}-IL_2)$ $(=PL_{22}-IL_2)$ $(=PL_{23}-IL_2)$

# FIG. 6

(A)

SIXTH SECTOR

START OF DATA RECEPTION → $t_6$

END OF DATA RECEPTION → $t_6'$

END OF DELAY PROFILE CREATION → $t_6''$

FIRST SECTOR

START OF DATA RECEPTION → $t_1$

END OF DATA RECEPTION → $t_1'$

END OF DELAY PROFILE CREATION → $t_1''$

$\Delta T$

(B)

SIXTH SECTOR

START OF DATA RECEPTION → $t_6$

END OF DATA RECEPTION → $t_6'$

END OF DELAY PROFILE CREATION → $t_6''$

FIRST SECTOR

START OF DATA RECEPTION → $t_1$

END OF DATA RECEPTION → $t_1'$

END OF DELAY PROFILE CREATION → $t_1''$

$\Delta T$

# FIG. 7

SECTOR RECEIVED DATA STORAGE MEMORY $27_1$ ... SECTOR RECEIVED DATA STORAGE MEMORY $27_6$

28

DELAY PROFILE DATA CREATION PORTION

SELECTOR ~28a

28c

#0 #1 #2 #254 #255
FF → FF → FF ··· FF → FF

OVERSAMPLE CONTROL PORTION ~28b

28e

DE-SPREAD CODE GENERATION PORTION

DE-SPREADING PORTION  DE-SPREADING PORTION  DE-SPREADING PORTION  DE-SPREADING PORTION ~28f

Q

FF → FF → FF ··· FF → FF ~28d

28g   28i

Σ  cos  POWER CONVER-SION  28k

28h

Σ  sin  POWER CONVER-SION ~28j

PATH SEARCH PORTION

MPU Bus

EP 1 643 790 A2

# FIG. 8

```
        START
          │
          ▼
┌──────────────────────────────────┐  301
│ CALCULATE RECEPTION START TIMING AND│
│ RECEPTION END TIMING Tend; OF CHANNELS│
│ ALLOCATED TO MOBILE DEVICE IN ALL  │
│ SECTORS (i) ASSOCIATED WITH HANDOVER│
└──────────────────────────────────┘
          │
          ▼
┌──────────────────────────────────┐  302
│ CALCULATE DIFFERENCE ΔTi BETWEEN MINIMUM│
│ RECEPTION END TIMING Tend AND Tend;│
└──────────────────────────────────┘
          │
          ▼
      ╱────────────────╲  303
 NO  │ IS ΔTi > THRESHOLD│
◄────│ VALUE?            │
 │    ╲────────────────╱
 │         │ YES
 │         ▼
 │  ┌──────────────────────────────────┐  304
 │  │ FOR jTH CHANNEL OF iTH SECTOR     │
 │  │ CORRESPONDING WITH ΔTi:           │
 │  │ (1) THINNING OF NUMBER OF OVERSAMPLES│
 │  │ (2) USAGE OF VALUE OF INTERFERENCE POWER│
 │  │     LEVEL STORAGE MEMORY AS AVERAGE│
 │  │     INTERFERENCE POWER LEVEL VALUE│
 │  └──────────────────────────────────┘
 │         │
 └────────►│
           ▼
         END
```

# FIG. 9

MPU — 25

SECTOR 1 PROFILE DATA — PROFILE STORAGE BUFFER — 29a₁ — ch1, ch2, ·· chN

SECTOR 2 PROFILE DATA — PROFILE STORAGE BUFFER — 29a₂ — ch1, ch2, ·· chN

SECTOR 3 PROFILE DATA — PROFILE STORAGE BUFFER — 29a₃ — ch1, ch2, ·· chN

SECTOR 4 PROFILE DATA — PROFILE STORAGE BUFFER — 29a₄ — ch1, ch2, ·· chN

SECTOR 5 PROFILE DATA — PROFILE STORAGE BUFFER — 29a₅ — ch1, ch2, ·· chN

SECTOR 6 PROFILE DATA — PROFILE STORAGE BUFFER — 29a₆ — ch1, ch2, ·· chN

PATH DETECTION PORTION — 29b

INTERFERENCE POWER LEVEL STORAGE MEMORY — 30

PATH SEARCH PORTION — 29

PATH INFORMATION

FIG. 10

# FIG. 11

# FIG. 12

SECTOR 1

SECTOR 2

SECTOR 6

SECTOR 5

WIRELESS
BACKBONE
BASE STATION
DEVICE

SECTOR 3

MOBILE
STATION

SECTOR 4

CELL RADIUS R

## FIG. 13

## FIG. 14

RECEPTION
LEVEL

PATH ALLOCATED TO FINGER

MP$_1$

MP$_2$

MP$_3$

THRESHOLD VALUE

TIME

$t_1$  $t_2$  $t_3$

# FIG. 15

CELL RADIUS OF CONVENTIONAL DEVICE

10e

8e

ADVANCE BASE STATION

8f

ADVANCE BASE STATION

10f

9e

10d

8d

ADVANCE BASE STATION

9d

1

9f

10a

8a

ADVANCE BASE STATION

5

WIRELESS BACKBONE BASE STATION DEVICE

9a

10[km]

40[km]

9c

9b

10c

8c

ADVANCE BASE STATION

10b

8b

ADVANCE BASE STATION

# FIG. 16

(A)

BASE STATION
TRANSMISSION

ARRIVAL
AT MOBILE
DEVICE

RESPONSE
OF MOBILE
DEVICE

ARRIVAL
AT BASE
STATION

$T_0$    $T_1$    $T_2$    $T_3$

DOWNLINK
DELAY TIME

1024chip
FIXED INTERVAL

UPLINK
DELAY TIME

$t_{d1}$    $t_c$    $t_{d1}$

(B)

START OF BASE
STATION RECEPTION
OPERATION

RECEIPT OF UPLINK
SIGNAL FROM
MOBILE DEVICE

1024chip
TIME OFFSET

$T_0$    $T_{12}$    $T_3$    $T_4$

$t_c$    $t_{d1} + t_{d2}$

DELAY PROFILE CREATION INTERVAL